# EUROPEAN PATENT APPLICATION

(11) **EP 1 868 188 A2**
(43) Date of publication of application: **19.12.2007**
(21) Application number: 07252374.9
(22) Date of filing: 12.06.2007
(51) Int. Cl.: G11B 7/007, G11B 7/24

(54) **Optical information recording medium and object drawing method for optical information recording medium**

(30) Priority: 16.06.2006 JP 2006193374
(71) Applicant: TAIYO YUDEN CO., LTD., Tokyo 110-0005 (JP)
(72) Inventor: Somei, Hidenori, Tokyo 110-0005 (JP); Kobayashi, Satoshi, Tokyo 110-0005 (JP); Yamada, Eiji, Tokyo 110-0005 (JP)
(74) Representative: Jackson, Richard Eric

(57) **Abstract**

An optical information recording medium has a recording layer and a first semi-transmissive reflective layer which are formed on one surface of a first light-transmissive substrate. Information can be recorded by irradiating a laser beam to the recording layer from the other surface side of the first light-transmissive substrate. The optical information recording medium further comprises a second light-transmissive substrate bonded to the one surface side of the first light-transmissive substrate, which includes the recording layer and the first semi-transmissive reflective layer, a second semi-transmissive reflective layer formed on the second light-transmissive substrate, a heat generating layer formed on the second semi-transmissive reflective layer, and a color developing layer formed on the heat generating layer. With the optical information recording medium, drawing of an object viewable from the label surface side can be made without restricting a data recording area with not need of turning over the optical information recording medium.

## Description

### BACKGROUND OF THE INVENTION

### 1. Field of the Invention

The present invention relates to an optical information recording medium in the form of a disk. More particularly, the present invention relates to an optical information recording medium capable of drawing an object viewable from the label surface side by irradiation of a laser beam, and also relates to a method for drawing an object on an optical information recording medium.

### 2. Description of the Related Art

A disk-shaped optical information recording medium, e.g., a CD-R, DVD±R, and Blue-ray disk, has a structure that a recording layer and a reflective layer are formed on one surface of a light transmissive substrate. A laser beam is irradiated from the other surface side of the substrate to record data in the recording layer. Also, the other surface of the optical information recording medium opposite to the one surface to which is irradiated the laser beam is usually utilized as a label surface. Characters, symbols, figures, patterns, combinations of those objects, etc. are drawn on the label surface by printing, for example.

With regards to such an optical information recording medium, various methods for drawing the objects by irradiation of a laser beam are proposed.

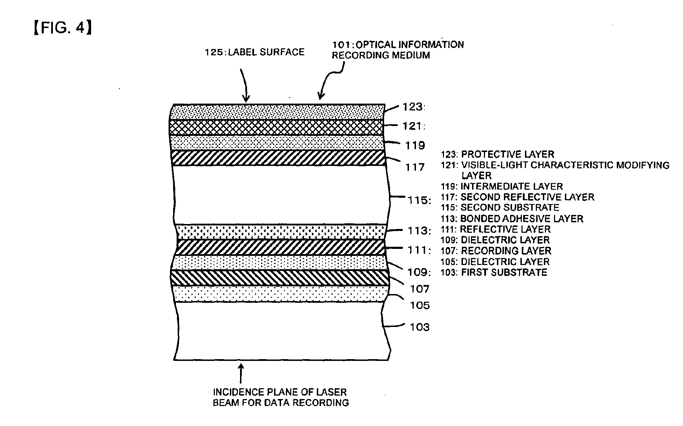

For example, Patent Document 1 (Japanese Unexamined Patent Application Publication No. 2002-203321) proposes an optical information recording medium in which an area (or a layer) allowing an object to be drawn therein by irradiation of a laser beam is formed on the label surface side. More specifically, as shown in Fig. 4, a dielectric layer 105, a recording layer 107, a dielectric layer 109, and a reflective layer 111 are successively formed in this order on one surface of a first transparent substrate 103. A second substrate 115 is bonded onto the reflective layer 111 with an adhesive layer 113 interposed between them. A second reflective layer 117, an intermediate layer 119, a visible-light characteristic modifying layer 121, and a protective layer 123 are successively formed in this order on a surface of the second substrate 115. Data recording into the recording layer 107 is performed by irradiating the laser beam to the recording layer 107 from the other surface side of the first substrate 103. Further, formation of an image on the same side as a label surface 125 is performed by irradiating the laser beam to the visible-light characteristic modifying layer 121 from the same side as the label surface 125.

Also, Patent Document 2 (Japanese Unexamined Patent Application Publication No. 2003-051118) proposes an optical information recording medium in which a part of a data recording area is allocated to an area where characters and/or an image is to be drawn.

However, in the former related art, because the drawing area is positioned on the side opposite to a data recording surface, the optical information recording medium has to be turned over at the time of drawing an object. In the latter related art, because a part of the data recording area is used for drawing, the data recording and the drawing have to be avoided from interfering with each other. This results in a problem that the data recording area and the drawing area are restricted.

### SUMMARY OF THE INVENTION

With the view of solving the above-described problems, an object of the present invention is to provide an optical information recording medium in which drawing of an object viewable from the label surface side can be made without restricting a data recording area with out the need of turning over the optical information recording medium.

To achieve the above object, the present invention provides an optical information recording medium given blow:
(1) An optical information recording medium having a recording layer and a first semi-transmissive reflective layer which are formed on one surface of a first light-transmissive substrate, and enabling information to be recorded by irradiating a laser beam to the recording layer from the other surface side of the first light-transmissive substrate, the optical information recording medium comprising a second light-transmissive substrate bonded to the one surface side of the first light-transmissive substrate, which includes the recording layer and the first semi-transmissive reflective layer, a second semi-transmissive reflective layer formed on the second light-transmissive substrate, a heat generating layer formed on the second semi-transmissive reflective layer, and a color developing layer formed on the heat generating layer. (Hereinafter referred to as a first aspect of the present invention)

In one preferable form, the above optical information recording medium is featured in that;
(2) a protective layer is formed on the color developing layer. (Hereinafter referred to as a second aspect of the present invention)

In another preferable form, the above optical information recording medium is featured in that;
(3) a spiral groove for tracking is formed on a surface of the second light-transmissive substrate on the side where the second semi-transmissive reflective layer is formed. (Hereinafter referred to as a third aspect of the present invention)

In still another preferable form, the above optical information recording medium is featured in that;
(4) an intermediate layer is formed between the second semi-transmissive reflective layer and the heat generating layer. (Hereinafter referred to as a fourth aspect of the present invention)

Also, to achieve the above object, the present invention provides an object drawing method for an optical information recording medium given below:
(5) An object drawing method for an optical information recording medium comprising a recording layer and a first semi-transmissive reflective layer which are formed in this order on one surface of a first light-transmissive substrate from the substrate side, a second light-transmissive substrate bonded to the one surface side of the first light-transmissive substrate, which includes the recording layer and the first semi-transmissive reflective layer, and a second semi-transmissive reflective layer, a heat generating layer, and a color developing layer which are formed on the second light-transmissive substrate, wherein a laser beam is irradiated to the heat generating layer through the second semi-transmissive reflective layer from the same side as that from which a laser beam is irradiated in data recording. (Hereinafter referred to as a fifth aspect of the present invention)

In one preferable form, the above object drawing method for an optical information recording medium is featured in that;
(6) the irradiation of the laser beam to the recording layer and the irradiation of the laser beam to the heat generating layer are performed at the same time. (Hereinafter referred to as a sixth aspect of the present invention)

According to the first aspect, the present invention operates as follows. A part of the laser beam irradiated from the other surface side of the first light-transmissive substrate reaches the heat generating layer through the second light-transmissive substrate and the second semi-transmissive reflective layer. The heat generating layer absorbs the irradiated laser beam and generates heat. With the generated heat, a color is developed (or changed) in the color developing layer to vary characteristics (such as a color (hue, lightness and saturation), a spectrum, reflectance, transmittance, and light scattering) of a visible light coming from the label surface side, thus drawing an object in a viewable manner.

Further, a part of the laser beam irradiated in the drawing is reflected by the second semi-transmissive reflective layer and is returned to an optical recording device. Therefore, focus control of the laser beam can be stably performed in the drawing.

According to the second aspect, the present invention operates as follows. Since a transparent protective layer is formed on the color developing layer, each layer of the optical information recording medium can be prevented, for example, from deteriorating from the label surface side (i.e., the color developing layer side), and a user can clearly view the object drawn in the color developing layer from the label surface side through the protective layer.

According to the third aspect, the present invention operates as follows. Since a spiral groove for tracking is formed on a surface of the second light-transmissive substrate on the side where the second semi-transmissive reflective layer is formed, the laser beam can be irradiated to a desired position in the drawing with the spiral groove used as a reference for positioning.

According to the fourth aspect, the present invention operates as follows. Since an intermediate layer is formed between the second semi-transmissive reflective layer and the heat generating layer, the efficiency of color development can be increased.

Also, the intermediate layer formed between the second semi-transmissive reflective layer and the heat generating layer can be used to adjust a color and a color difference of the label surface before the drawing.

According to the fifth aspect, the present invention operates as follows. Since a laser beam is irradiated to the heat generating layer through the second light-transmissive substrate and the second semi-transmissive reflective layer from the same side as that from which a laser beam is irradiated in data recording, a part of the laser beam irradiated from the first light-transmissive substrate side reaches the heat generating layer through the second light-transmissive substrate and the second semi-transmissive reflective layer. The heat generating layer generates heat with the irradiated laser beam. With the generated heat, a color is developed (or changed) in the color developing layer, thus drawing an object viewable from the outside.

Further, since a part of the laser beam irradiated in the drawing is reflected by the second semi-transmissive reflective layer and is returned to the optical recording device, focus control of the laser beam can be stably performed in the drawing.

According to the sixth aspect, the present invention operates as follows. Even when the irradiation of the laser beam to the recording layer and the irradiation of the laser beam to the heat generating layer are performed at the same time, a proper distance between the recording layer of a data recording portion and the heat generating layer of a drawn-object recording portion can be ensured by the presence of the second light-transmissive substrate, and the respective irradiated laser beams can be satisfactorily condensed in an independent manner.

In addition, since the proper distance between the recording layer of the data recording portion and the heat generating layer of the drawn-object recording portion is ensured by the presence of the second light-transmissive substrate even when the irradiation of the laser beam to the recording layer and the irradiation of the laser beam to the heat generating layer are performed at the same time, the influence of heat generated by the recording layer of the data recording portion and the heat generating layer of the drawn-object recording portion with irradiation of the laser beams can be separated from each other. It is therefore possible to independently record data and a drawn object in the recording layer and the heat generating layer.

According to the optical information recording medium of the present invention, the drawing of an object viewable from the label surface side can be made without restricting a data recording area with at the need of turning over the optical information recording medium.

Also, according to the object drawing method for the optical information recording medium of the present invention, the drawing of the object viewable from the label surface side can be made without turning over the optical information recording medium. Further, since a part of the laser beam irradiated in the drawing is reflected by the second semi-transmissive reflective layer and is returned to the optical recording device, focus control of the laser beam can be stably performed in the drawing.

The above and other objects, constructive features, and operating advantages of the present invention will be apparent from the following description and the accompanying drawings.

### BRIEF DESCRIPTION OF THE DRAWINGS

Fig. 1 is a partial enlarged sectional view showing an internal structure of an optical information recording medium according to a first embodiment of the present invention.

Fig. 2 is a partial enlarged sectional view showing an internal structure of an optical information recording medium according to a second embodiment of the present invention.

Fig. 3 is a partial enlarged sectional view showing an internal structure of an optical information recording medium according to a third embodiment of the present invention.

Fig. 4 is a partial enlarged sectional view showing one example of the related art.

### DESCRIPTION OF THE PREFERRED EMBODIMENTS

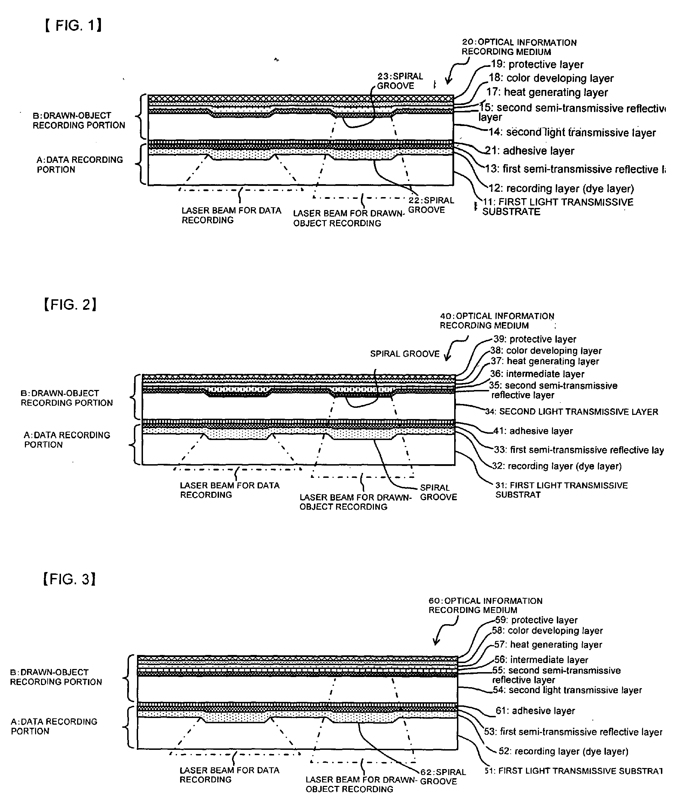

An optical information recording medium according to a first embodiment of the present invention will be described below with reference to Fig. 1. Fig. 1 is a partial enlarged sectional view showing an internal structure of an optical information recording medium 20 of the first embodiment.

As shown in Fig. 1, the optical information recording medium 20 of the first embodiment has a structure that a data recording portion A and a drawn-object recording portion B are bonded to each other with an adhesive layer 21 interposed between them.

More specifically, the optical information recording medium 20 has a recording layer 12 and a first semi-transmissive reflective layer 13 which are formed in this order on one surface of a first light-transmissive substrate 11. Information can be recorded on the optical information recording medium 20 by irradiating a laser beam to the recording layer 12 from the other surface side of the substrate 11. The optical information recording medium 20 further has a second light-transmissive substrate 14 bonded to the one surface side of the first light-transmissive substrate 11, which includes the recording layer 12 and the first semi-transmissive reflective layer 13. In addition, the optical information recording medium 20 has a second semi-transmissive reflective layer 15 formed on the second light-transmissive substrate 14, a heat generating layer 17 formed on the second semi-transmissive reflective layer 15, and a color developing layer 18 formed on the heat generating layer 17.

In this first embodiment, a transparent protective layer 19 is formed on the color developing layer 18.

Further, in this first embodiment, a spiral groove 23 for tracking is formed on a surface of the second light-transmissive substrate 14 on the side where the second semi-transmissive reflective layer 15 is formed. The second semi-transmissive reflective layer 15 formed on the second light-transmissive substrate 14 has a substantially uniform thickness along the surface of the second light-transmissive substrate 14 on which the spiral groove 23 for tracking is formed. The heat generating layer 17 is formed on the second semi-transmissive reflective layer 15 so as to fill a recess along the spiral groove 23 for tracking, which appears on the second semi-transmissive reflective layer 15. The color developing layer 18 formed on the heat generating layer 17 and the transparent protective layer 19 formed on the color developing layer 18 are each formed to have a substantially uniform thickness and a flat surface.

Thus, the optical information recording medium 20 of the first embodiment has substantially the same structure as an ordinary DVD-R optical disk except for that the second semi-transmissive reflective layer 15, the heat generating layer 17, the color developing layer 18, and the transparent protective layer 19 are formed on the second light-transmissive substrate 14. The color developing layer 18 can be viewed from the label surface side through the transparent protective layer 19.

The first light-transmissive substrate 11 is made of a transparent resin, such as a polycarbonate or acrylic resin, and it is formed as a thin base plate having a predetermined shape (e.g., a doughnut-like shape in the case of an optical disk) by injection molding, for example. Usable resins are not limited to the above examples, and an ultraviolet curing resin can also be used.

The recording layer 12 contains an organic dye. With irradiation of a laser beam of a predetermined wavelength, a pit is formed in the recording layer 12 for recording of data. The organic dye is preferably a phthalocyanine-, cyanine-, or azo-based dye. Data information including music, images, computer programs, etc. can be recorded in and/or reproduced from the recording layer 12 by irradiating a laser beam of which wavelength is the same as or differs from that of the laser beam irradiated to heat the heat generating layer 17.

The first semi-transmissive reflective layer 13 is made of a material reflecting the laser beam for data recording and/or reproduction while allowing the laser beam for drawn-object recording to pass through it. In practice, the first semi-transmissive reflective layer 13 is made of a metal film (of, e.g., Ag, an Ag alloy, or Al) or a dielectric multilayer film in which oxide films having different refractive indexes are successively layered. Preferably, a metal film or a dielectric multilayer film obtained with proper selection and control of the film material or the thickness of each layer is used to further increase the reflectance of the laser beam for data recording in DVD and the transmittance of the laser beam for drawn-object recording. Additionally, the first semi-transmissive reflective layer 13 and the recording layer 12 can also be realized with a structure corresponding to the L0 layer in Dual standards for DVD+R.

The adhesive layer 21 is preferably made of, e.g., an epoxy-based adhesive.

The second light-transmissive substrate 14 can be made of the same material as the first light-transmissive substrate 11. By utilizing a bonding step in manufacturing of DVD-R, therefore, the data recording portion A formed using the first light-transmissive substrate 11 and the drawn-object recording portion B formed using the second light-transmissive substrate 14 can be bonded integrally with each other.

The second light-transmissive substrate 14 serves also to ensure a proper distance between the recording layer 12 of the data recording portion A and the heat generating layer 17 of the drawn-object recording portion B. Thus, by adjusting the thickness of the second light-transmissive substrate 14 so that the distance from the other surface of the first light-transmissive substrate 11, i.e., the incidence plane of the laser beam, to the protective layer 19 takes a value in conformity with the CD-R standards, the respective laser beams irradiated to the recording layer 12 of the data recording portion A and the heat generating layer 17 of the drawn-object recording portion B can be satisfactorily condensed in an independent manner. In addition, the influence of heat generated by the recording layer 12 of the data recording portion A and the heat generating layer 17 of the drawn-object recording portion B with the irradiation of the laser beams can be separated from each other.

The second semi-transmissive reflective layer 15 reflects one part of the laser beam irradiated to the layer 15 for return to an optical recording device, thus enabling stable focus control to be performed. Also, the second semi-transmissive reflective layer 15 allows the other part of the laser beam irradiated to the layer 15 to pass through it such that all of the laser beam having passed through the layer 15 can reach the heat generating layer 17. As in the first semi-transmissive reflective layer 13, the second semi-transmissive reflective layer 15 is made of a metal film (of, e.g., Ag, an Ag alloy, or Al) or a dielectric multilayered film in which oxide films having different refractive indexes are successively layered. The amount of the laser beam reflected by the second semi-transmissive reflective layer 15 can be adjusted depending on the material and/or the thickness of each film constituting the second semi-transmissive reflective layer 15. Therefore, stable supply of the reflected light beam can be easily realized.

The heat generating layer 17 is formed as a layer made of an inorganic phase-change material or mixed with an organic dye, which includes the wavelength of the laser beam irradiated to the heat generating layer 17 within a light absorption wavelength range thereof and can efficiently convert the absorbed light to heat. As in the recording layer 12, the organic dye is preferably a phthalocyanine-, cyanine-, or azo-based dye. However, its light absorption characteristic preferably differs from that of the organic dye in the recording layer 12. Since a part of the laser beam which has been irradiated and has passed through the second semi-transmissive reflective layer 15 is absorbed by the heat generating layer 17, it is possible to use, for example, a dye which has an absorption range covering the wavelength of the irradiated laser beam.

As an alternative, the heat generating layer 17 can be made of a material that has a characteristic of absorbing a part of the irradiated laser beam and visible light and generates heat while undergoing decomposition.

Further, the heat generating layer 17 can be made of a material that directly diffuses the heat generated with irradiation of the laser beam to the color developing layer 18 which contacts the heat generating layer 17.

The color developing layer 18 is made of a material which can change a color with heating or irradiation of the laser beam. For example, a layer mixed with a heat sensitive agent or an organic dye or a film made of an inorganic phase-change material can be used. The color developing layer 18 can record therein, as viewable drawn-object information, a title, an index, etc. corresponding to music information, image information, a program, etc. which is recorded as data in the recording layer 12.

For the purpose of increasing the efficiency of color development, the color developing layer 18 can be made of materials having different molecular structures. For example, the color developing layer 18 can be formed of a single-layer structure in which a color developing precursor layer and a color producing layer are mixed in random, or a multilayer structure in which a color developing precursor layer and a color producing layer are alternately laminated in a separated state.

The color developing precursor layer is preferably made of a color developing precursor and a sensitizer with the function of dispersing the color developing precursor. It also preferably contains a binder as a dispersant.

Further, the color producing layer is preferably made of a color producing agent and a sensitizer with the function of dispersing the color producing agent. It also preferably contains a binder as a dispersant.

The protective layer 19 is made of a transparent resin such as an acrylic ultraviolet curing resin or a solvent soluble high-molecular resin. The protective layer 19 serves to prevent, e.g., deterioration of the label surface side which contains the color developing layer 18.

An object drawing method for the optical information recording medium according to the first embodiment of the present invention will be described below with reference to Fig. 1. The partial enlarged sectional view of Fig. 1 also serves to explain the object drawing method for the optical information recording medium according to the first embodiment.

As shown in Fig. 1, because the optical information recording medium 20 of the first embodiment has the structure that the data recording portion A and the drawn-object recording portion B are bonded to each other with the adhesive layer 21 interposed between them, the laser beam for drawn-object recording is irradiated from the same surface side of the first light-transmissive substrate 11 as the laser beam for data recording. The laser beam for drawn-object recording is absorbed by the heat generating layer 17 after having passed through the first light-transmissive substrate 11, the recording layer 12, the first semi-transmissive reflective layer 13, the adhesive layer 21, the second light-transmissive substrate 14, and the second semi-transmissive reflective layer 15. With the heat generated by the heat generating layer 17 and the laser beam irradiated to the color developing layer 18, color development or color change is caused in the color developing layer 18 so as to record a drawn object which is viewable from the label surface side through the transparent protective layer 19.

Since the laser beam for data recording which is irradiated to the recording layer 12 of the data recording portion A and the laser beam for drawn-object recording which is irradiated to the heat generating layer 17 of the drawn-object recording portion B are condensed at different focal lengths, the two laser beams can be avoided from interfering with each other by focus control of the optical recording device even when those two laser beams have the same wavelength. Also, the laser beam for data recording which is irradiated to the recording layer 12 of the data recording portion A and the laser beam for drawn-object recording which is irradiated to the heat generating layer 17 of the drawn-object recording portion B may have different light absorption characteristics (absorbances). In practice, a peak difference in absorbance between the two laser beams can be set to 75 nm, preferably 100 nm, and more preferably 125 nm. In the case of DVD, for example, the wavelength of the laser beam for data recording is generally about 660 nm. Therefore, a laser beam having a wavelength of 785 nm can be used as the laser beam for drawn-object recording.

Some types of the so-called multi-drive, i.e., an optical recording device capable of recording an image and data on both DVD±R and CD-R, include two kinds of light sources, i.e., a laser beam source for DVD±R and a laser beam source for CD-R. In the case using the multi-drive, the recording of data in the recording layer 12 of the data recording portion A and the irradiation of the laser beam to the heat generating layer 17 of the drawn-object recording portion B can be performed at the same time by employing both the light sources. Such an irradiation method can be practiced in accordance with software for controlling the optical recording device (not shown).

An optical information recording medium according to a second embodiment of the present invention will be described below with reference to Fig. 2. Fig. 2 is a partial enlarged sectional view showing an internal structure of an optical information recording medium 40 of the second embodiment.

As shown in Fig. 2, the optical information recording medium 40 of the second embodiment is similar to the optical information recording medium 20 of the first embodiment in having a structure that a data recording portion A and a drawn-object recording portion B are bonded to each other with an adhesive layer 41 interposed between them.

More specifically, the optical information recording medium 40 has a recording layer 32 and a first semi-transmissive reflective layer 33 which are formed in this order on one surface of a first light-transmissive substrate 31. Information can be recorded on the optical information recording medium 40 by irradiating a laser beam to the recording layer 32 from the other surface side of the substrate 31. The optical information recording medium 40 further has a second light-transmissive substrate 34 bonded to the one surface side of the first light-transmissive substrate 31, which includes the recording layer 32 and the first semi-transmissive reflective layer 33. In addition, the optical information recording medium 40 has a second semi-transmissive reflective layer 35 formed on the second light-transmissive substrate 34, an intermediate layer 36 formed on the second semi-transmissive reflective layer 35, a heat generating layer 37 formed on the intermediate layer 36, and a color developing layer 38 formed on the heat generating layer 37.

In this second embodiment, a transparent protective layer 39 is formed on the color developing layer 38.

Further, in this second embodiment, a spiral groove 43 for tracking is formed on a surface of the second light-transmissive substrate 34 on the side where the second semi-transmissive reflective layer 35 is formed. The second semi-transmissive reflective layer 35 formed on the second light-transmissive substrate 34 has a substantially uniform thickness along the surface of the second light-transmissive substrate 34 on which the spiral groove 43 for tracking is formed.

This second embodiment differs from the first embodiment in that the intermediate layer 36 is interposed between the second semi-transmissive reflective layer 35 and the heat generating layer 37. Thus, the intermediate layer 36 is formed on the second semi-transmissive reflective layer 35 so as to fill a recess along the spiral groove 43 for tracking, which appears on the second semi-transmissive reflective layer 35. The heat generating layer 37 formed on the intermediate layer 36, the color developing layer 38 formed on the heat generating layer 37, and the transparent protective layer 39 formed on the color developing layer 38 are each formed to have a substantially uniform thickness and a flat surface. The other construction and operating advantages of this second embodiment are the same as those in the first embodiment and a description thereof is not repeated here.

The intermediate layer 36 is preferably made of, e.g., an acrylic resin, a polystyrene-based resin, a vinyl toluene-based resin, a rosin ester-based resin, an epoxy-based resin, or an inorganic transparent thin film. The intermediate layer 36 can be used to realize, e.g., modulation of contrast or multicolor representation when the recorded drawn object is viewed from the label surface side. A pigment or the like can also be added to adjust a color and a color difference before the drawing.

Further, the intermediate layer 36 preferably has a characteristic that the thermal conductivity of the intermediate layer 36 is smaller than that of the color developing (color changing) layer 38. With such a characteristic, the heat generated in the heat generating layer 37 can be efficiently diffused to the color developing (color changing) layer 38.

An optical information recording medium according to a third embodiment of the present invention will be described below with reference to Fig. 3. Fig. 3 is a partial enlarged sectional view showing an internal structure of an optical information recording medium 60 of the third embodiment.

As shown in Fig. 3, the optical information recording medium 60 of the third embodiment is similar to the optical information recording medium of each of the first and second embodiments in point of having a structure that a data recording portion A and a drawn-object recording portion B are bonded to each other with an adhesive layer 61 interposed between them.

More specifically, the optical information recording medium 60 has a recording layer 52 and a first semi-transmissive reflective layer 53 which are formed in this order on one surface of a first light-transmissive substrate 51. Information can be recorded on the optical information recording medium 60 by irradiating a laser beam to the recording layer 52 from the other surface side of the substrate 51. The optical information recording medium 60 further has a second light-transmissive substrate 54 bonded to the one surface side of the first light-transmissive substrate 51, which includes the recording layer 52 and the first semi-transmissive reflective layer 53. In addition, the optical information recording medium 60 has a second semi-transmissive reflective layer 55 formed on the second light-transmissive substrate 54, an intermediate layer 56 formed on the second semi-transmissive reflective layer 55, a heat generating layer 57 formed on the intermediate layer 56, and a color developing layer 58 formed on the heat generating layer 57.

In this third embodiment, a transparent protective layer 59 is formed on the color developing layer 58.

Further, this third embodiment is similar to the second embodiment in that the intermediate layer 56 is interposed between the second semi-transmissive reflective layer 55 and the heat generating layer 57.

This third embodiment differs from the first and second embodiments in that a spiral groove for tracking is not formed on a surface of the second light-transmissive substrate 54 on the side where the second semi-transmissive reflective layer 55 is formed. Therefore, the second semi-transmissive reflective layer 55 formed on the second light-transmissive substrate 54, the intermediate layer 56 formed on the second semi-transmissive reflective layer 55, the heat generating layer 57 formed on the intermediate layer 56, the color developing layer 58 formed on the heat generating layer 57, and the transparent protective layer 59 formed on the color developing layer 58 are each formed to have a substantially uniform thickness and a flat surface. The other construction and operating advantages of this third embodiment are the same as those in the first embodiment and a description thereof is not repeated here.

While the embodiments have been described above in connection with the optical information recording medium having the structure of a DVD±R disk, the present invention is not limited to the above-described structure. The present invention can also be applied to other various types of optical information recording media, including CD-R, HD-DVD, and Blue-ray disks.

## Claims

1. An optical information recording medium having a recording layer and a first semi-transmissive reflective layer which are formed on a first surface of a first light-transmissive substrate, and enabling information to be recorded by irradiating a laser beam to the recording layer from a second surface side of the first light-transmissive substrate, the optical information recording medium comprising:
a second light-transmissive substrate bonded to the first surface side of the first light-transmissive substrate, which includes the recording layer and the first semi-transmissive reflective layer;
a second semi-transmissive reflective layer formed on the second light-transmissive substrate;
a heat generating layer formed on the second semi-transmissive reflective layer; and
a color developing layer formed on the heat generating layer.

2. The optical information recording medium according to Claim 1, wherein a protective layer is formed on the color developing layer.

3. The optical information recording medium according to Claim 1, wherein a spiral groove for tracking is formed on a surface of the second light-transmissive substrate on the side where the second semi-transmissive reflective layer is formed.

4. The optical information recording medium according to Claim 1, wherein an intermediate layer is formed between the second semi-transmissive reflective layer and the heat generating layer.

5. An object drawing method for an optical information recording medium comprising a recording layer and a first semi-transmissive reflective layer which are formed in this order on a first surface of a first light-transmissive substrate from the substrate side, a second light-transmissive substrate bonded to the first surface side of the first light-transmissive substrate, which includes the recording layer and the first semi-transmissive reflective layer, and a second semi-transmissive reflective layer, a heat generating layer, and a color developing layer which are formed on the second light-transmissive substrate,
wherein a laser beam is irradiated to the heat generating layer through the second semi-transmissive reflective layer from the same side as that from which a laser beam is irradiated in data recording.

6. The object drawing method for the optical information recording medium according to Claim 5, wherein the irradiation of the laser beam to the recording layer and the irradiation of the laser beam to the heat generating layer are performed at the same time.
